# EUROPEAN PATENT SPECIFICATION

(11) **EP 1 757 436 B1**
(45) Date of publication and mention of the grant of the patent: **23.07.2008**
(21) Application number: 06015587.6
(22) Date of filing: 26.07.2006
(51) Int. Cl.: B29D 30/06, B29C 35/02

(54) **Method for manufacturing pneumatic tire**
Verfahren zur Herstellung eines pneumatischen Reifens
Procédé de fabrication d'un pneumatique

(30) Priority: 22.08.2005 JP 2005240158; 20.04.2006 JP 2006116973
(43) Date of publication of application: 28.02.2007
(73) Proprietor: Sumitomo Rubber Industries, Ltd., Kobe-shi, Hyogo-ken (JP)
(72) Inventor: Miyazaki, Tatsuya, 3-chome, Chuo-ku, Kobe-shi, Hyogo-ken (JP)
(74) Representative: Manitz, Finsterwald & Partner GbR

(56) References cited:
- EP-A2- 0 978 370
- WO-A-02/45942
- DE-A1- 19 748 035
- US-A- 3 718 721

## Description

The present invention relates to a method for manufacturing a pneumatic tire, more particularly to a technique for improving the adhesion between steel tire cords and rubber.

A method for manufacturing a pneumatic tire according to the preamble of claim 1 is known from EP 0 978 370 A2. Further, the technological background of the present invention is known from US 3 718 721, DE 19748035 A1 and WO 02/45942 A1.

In general, a pneumatic tire is provided in the tread portion with a tread reinforcing belt, and a tread rubber is disposed on the radially outside of the belt. The tread portion is subjected to a large deformation during running, and a large centrifugal force during high-speed running. Accordingly, good adhesion is required between the belt, especially the radially outermost belt ply and the tread rubber thereon.

In the case of pneumatic tires for passenger cars, light trucks, sport utility vehicles and the like provided with steel belts (breaker), the belt is formed from brass-plated steel cords rubberized with a topping rubber, wherein, as compared with rubber tire components disposed adjacently to the steel belt such as tread rubber, a larger amount of a vulcanizing agent, e.g., 5 to 6 phr of sulfur is added in the topping rubber to improve the adhesion between the steel and rubber.
The mechanism of such improvement in the adhesion is considered as follows: since the increased amount of sulfur increases the crosslink density of the vulcanized topping rubber, the hardness thereof becomes higher than the adjacent rubber tire components. Therefore, the rigidity change from the steel cords to the adjacent rubber tire component becomes gradual and thereby stress can be dispersed. Further, in the initial stage of the vulcanization, copper in the plated layer of the steel cord reacts with the sulfur to form a hard sulfide layer on the surface of the steel cord. This metal sulfide layer improves the bonding strength between the steel and topping rubber. Thus, the adhesion is improved.

On the other hand, the present inventor checked tires which caused separation failures, and found that the steel cords separated from the surrounding rubbers can be divided into two types although the tires were produced under the same conditions. One type is a cord whose surface is covered with the thin topping rubber. The other type is a cord whose surface is exposed. The latter type is regional and common to hot and humid areas.

Therefore, the present inventor made nano analysis of a boundary region between steel cords and topping rubber, focused attention on the sulfa concentration.

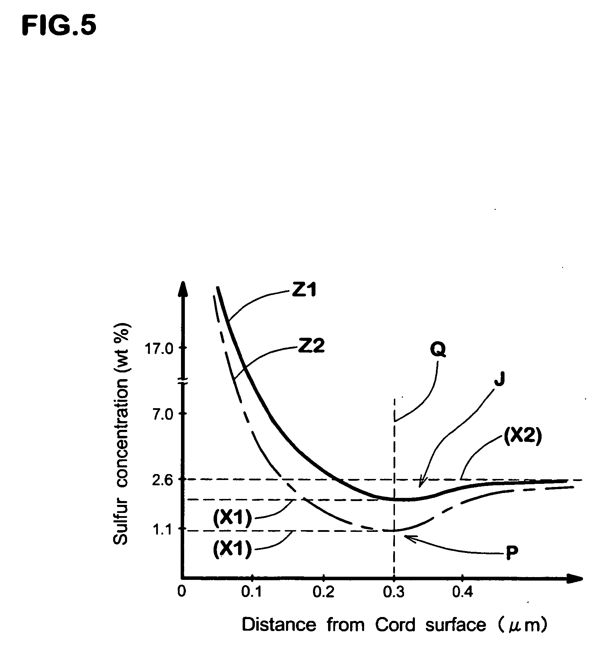

As a result, it was found that, in the former type separation, as shown in Fig.5 by a chain line Z1, the distribution of sulfur concentration shows a minimum P at a nearby position Q at a distance of about 0.3 micrometers from the surface of the steel cords. In this position Q, the topping rubber becomes weak because of the less sulfur. The separation failures are considered to occur, starting from this position when the sulfur content (concentration) is decreased down to about 45% or less of the initial value before vulcanization. This is considered to be the reason for the former type separation.

As to the latter type separation, on the other hand, it was found that, the sulfide layer capable of improving the bonding strength is deteriorated under high temperature and high humidity service conditions. Thus, it is considered that the topping rubber is completely separated from the steel cord.

Therefore, the object of the present invention is to provide a method for manufacturing a pneumatic tire having a steel cord reinforcing layer, which increases the adhesion between steel cords and topping rubber to improve tire performance, e.g. the resistance to cord/rubber separation, belt durability and the like, and prevents the sulfur concentration in a vicinity of steel cords from decreasing down to under a certain level to improve the adhesion between the steel cords and topping rubber..

This object is achieved according to the invention by the method as defined in claim 1.

Particular embodiments of the invention are the subject of the dependent claims.

According to the present invention, a method for manufacturing a pneumatic tire comprises: placing a green tire in a mold; and vulcanizing the green tire in the mold by applying heat to the tire, wherein
the green tire includes a steel cord reinforcing layer made of steel cords each having a plated layer containing copper and rubberized with an unvulcanized topping rubber, the unvulcanized topping rubber contains sulfur to have a sulfur content X2, and
during vulcanizing the green tire, the maximum temperature of the topping rubber in a vicinity of the steel cords is controlled within a range of 150 to 165 deg.c, and the temperature of the mold is controlled within a range of 165 to 190 deg.C, whereby the sulfur content X1 of the vulcanized topping rubber in the vicinity of the steel cords retains at least 50 % of the sulfur content x2.

In the initial stage of the vulcanization, the sulfur in the topping rubber reacts with the copper in the plated layer and a sulfide layer is formed on the surface of the steel cord. Accordingly, due to the resultant concentration gradient, the sulfur in the unvulcanized topping rubber migrates toward the surface of the steel cord. It is considered that the migration speed becomes higher in the vicinity of the cord surface. Therefore, at a certain point of time during vulcanization, if the difference between the amount consumed and amount supplied is large, a minimum sulfur concentration occurs at a certain position, and as the progress of the vulcanization, the minimum concentration P and the position Q are fixed as above.

According to the present invention, however, as the maximum temperature of the topping rubber during vulcanization is a relatively low temperature of 150 to 165 deg.C, the occurrence of a minimum is prevented, or alternatively, if occured, the decrease in the sulfur concentration at the minimum is lessened. Thus, the adhesion between the steel cords and topping rubber can be effectively improved.

Such a unfavorable decrease in the sulfur concentration occurs in the surrounding region of a steel cord which region ranges from the surface of the steel cord to a distance of 3 mm therefrom. Therefore, the above-mentioned "vicinity" is ideally the surrounding region ranging from the cord surface to 3 mm therefrom.
However, in the case of the steel belt, for example, a separation between the radially outermost steel belt (or breaker ply) and the tread rubber on the radially outside thereof is the most problematic matter. Therefore, there is a possibility that it is sufficient to prevent the unfavorable decrease in sulfur concentration occurring on the radially outside of the steel cord.
Further, in the case of a carcass made of steel cords, there is a possibility that a separation between the axially outermost steel carcass ply and a sidewall rubber on the axially outside thereof is a problematic matter rather than a separation of the tread rubber. It may be sufficient to prevent the unfavorable decrease in sulfur concentration occurring on the axially outside of the steel carcass cord.
Therefore, in this invention, the above-mentioned "vicinity" is defined as an adjoining region of a steel cord which region is located on at least one side of the cord (for example the radially outside of the cord) and ranges from the surface of the steel cord to a distance of 3 mm therefrom.

Examples of the present invention will now be described in detail in conjunction with the accompanying drawings.
Fig.1 is a cross sectional view schematically showing an example of a mold which can be used in the method for manufacturing pneumatic tire according to the present invention.
Fig.2 is a schematic cross sectional view showing an example of the green tire in its stress-free state.
Fig.3 is an enlarged schematic cross sectional view of a steel cord.
Fig.4 is an enlarged schematic cross sectional view of a steel cord belt ply.
Fig.5 is a graph showing distributions of sulfur concentration.
Fig.6 is a graph showing the temperature in the vicinity of the steel belt cords as a function of time.
Fig.7 is a time chart showing an example of the pressure change during tire vulcanization in the present invention, and a conventional pressure change.
Figs.8 and 9 are graphs showing distributions of cobalt concentration.

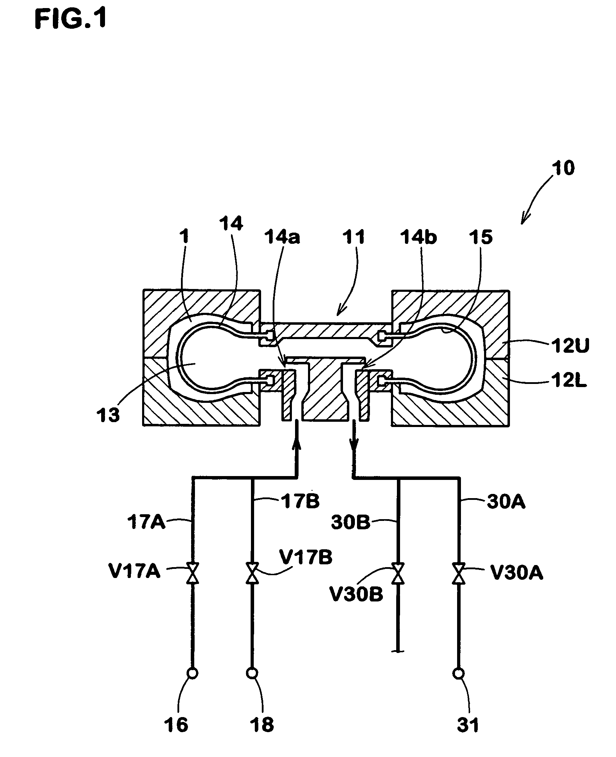

According to the present invention, as shown in Fig.1, a green tire 1 is put in a mold 10 and subjected to vulcanization-molding, so the vulcanized tire, namely, pneumatic tire is produced.

As well known in the art, the pneumatic tire comprises, a tread portion 2, a pair of sidewall portions 3, a pair of axially spaced bead portions 4 each with a bead core 5 therein, a carcass 6 extending between the bead portions 4, and a tread reinforcing belt 7 disposed radially outside the carcass in the tread portion.
The carcass 6 comprises at least one ply 6A of cords rubberized with a topping rubber and extending between the bead portions 4 through the tread portion 2 and sidewall portions 3. The edge portions of the carcass ply 6A are usually turned up around the bead cores 5 to be secured thereto.
The belt comprises a breaker 7 and optionally a band disposed on the radially outside of the breaker. The breaker 7 is composed of at least two cross breaker plies 7A disposed on the radially outside of the crown portion of the carcass 6.
In the tread portion 2, a tread rubber defining the tread surface is disposed on the radially outside of the belt. In each of the sidewall portions 3, a sidewall rubber defining the sidewall surface is disposed on the axially outside of the carcass 6. In each of the bead portions 4, a bead rubber so called clinch rubber defining the bead bottom face and axially outer surface of the bead portion is disposed. On the inside of the carcass, an innerliner rubber defining the inner surface of the tire is usually disposed.

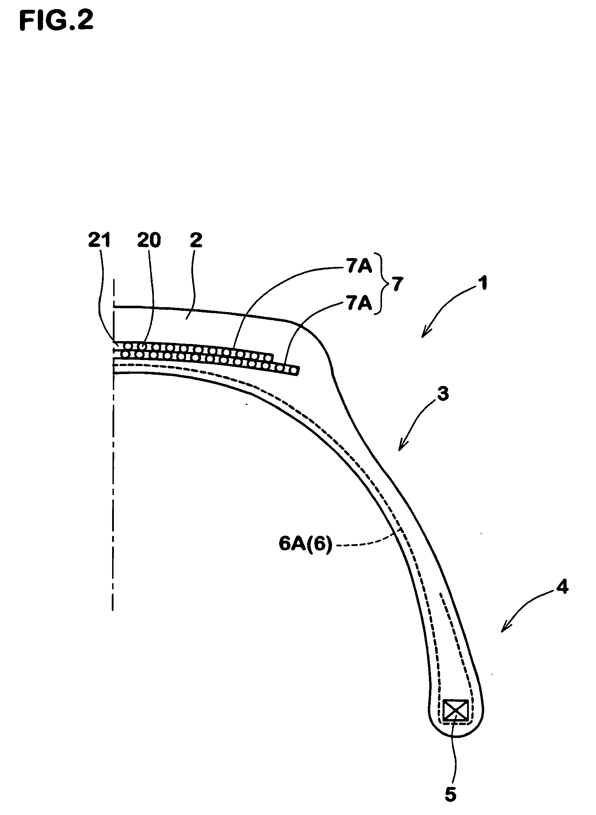

The green tire 1 has accordingly, the corresponding portions or parts in unvulcanized states as shown in Fig.2. (The reference numbers used in the green tire 1 correspond to those in the vulcanized tire.)

In this example, the above-mentioned breaker 7 is composed of two cross plies 7A of parallel steel cords 20, and the carcass 6 is composed of one ply of radially arranged steel cords.

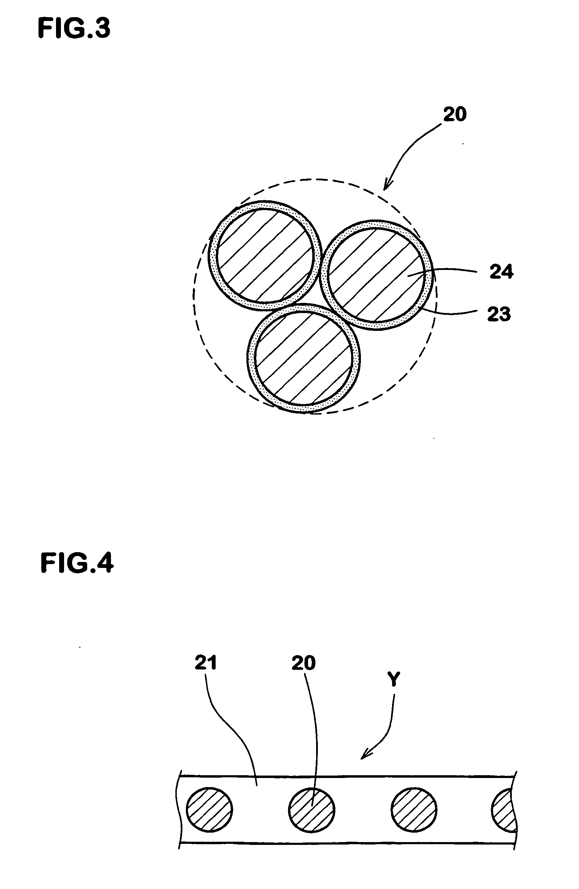

The steel cord is made up of at least one steel filament 24. In the case of the steel belt, a steel cord 20 made up of a single steel filament 24 can be used, but usually and in this example a steel cord made up of a plurality steel filaments 24 which are twisted together or bundled is used. In the case of the steel carcass, usually a steel cord made up of a plurality steel filaments 24 twisted together is used.
In any case, as shown in Fig.3, the steel filament 24 is plated with a metal alloy 23 containing copper to improve the adhesion to the adjacent rubber.

In the unvulcanized state, each breaker ply 7A is a strip of the parallel steel cords 20 rubberized with a topping rubber 21 as shown in Fig.4.

In the case of steel belt (breaker), as the topping rubber 21 is required to have a good tensile property, a NR or IR based rubber is preferably used. Therefore, the topping rubber 21 preferably contains 70 to 100 % by weight of natural rubber (NR) and/or isoprene rubber (IR), and 30 to 0 % by weight of other diene rubber as the rubber component thereof.
As to the other diene rubber, for instance, styrene-butadiene rubber (SBR), butadiene rubber (BR) and the like can be used alone or in combination.

Further, the topping rubber 21 contains sulfur as a vulcanizing agent. Furthermore, the topping rubber contains other additives, e.g., a reinforcing filler such as carbon black and/or silica, zinc oxide, an age resistor, a softening agent, stearic acid, a vulcanization accelerator and the like.

In order to increase the hardness of the vulcanized topping rubber 21 to thereby ease the difference in rigidity from the steel cords, the sulfur content is preferably set in a range of from 5 to 6 parts by weight per 100 parts by weight of the rubber component (namely 5 to 6 phr).
Thus, the sulfur content of the steel cord topping rubber 21 is higher than those of the tread rubber and sidewall rubber, which are usually set in a range of from 1.5 to 2.5 phr.

In the vulcanization-molding process, the green tire 1 is placed in the mold 10 and heated from the outside and inside of the tire. Then, in order to press the outer surface of the green tire 1 against the inner surface (molding face) of the mold 10, the inside of the green tire 1 is pressurized.

In Fig.1, the mold 10 is a split mold comprising an upper component 12U and a lower component 12L. In the closed state thereof, there is formed a vulcanization chamber 13 in which the green tire is placed. The upper and lower components 12U and 12L are each provided with a platen (not shown) having a heat source such as electric heater or steam jacket so as to increase the temperature of the inner surface of the mold 10 to which the green tire is pressed, and thereby to perform the heating from the outside as mentioned above.

In the center of the mold 10, a heating and pressurizing mechanism 11 is disposed, which comprises an inflatable bladder 14 in which an injection nozzle and exhaust nozzle are opened, and a supply port 14a and an exhaust port 14b connected to the injection nozzle and exhaust nozzle, respectively. The bladder 15 in this example is a dome-type bladder made of a rubber, and when fully inflated, the outer surface thereof comes into contact with the inner surface of the tire placed in the mold 10.

In order to heat the green tire from the inside thereof, the bladder 15 is fully inflated with a high-temperature highpressure heating medium.
The heating medium is supplied from a heating medium supply source 16 into the bladder 15 through a supply-pipe 17A provided with a switching valve V17A and connected to the supply port 14a. Then, in order to recover, the heating medium is exhausted from the bladder 15 through an exhaust pipe 30A provided with a switching valve V30A and connected to the exhaust port 14b.

After the bladder 15 is inflated with the heating medium for a certain period of time HT, in order to pressurize the inside of the tire, the bladder 15 is fully inflated with a pressurizing medium for a certain period of time PT.

In the case that the heating medium is steam, the pressurizing medium is an inert gas such as nitrogen gas having a higher pressure and the ambient temperature. In the case that the heating medium is hot water, the pressurizing medium is cold water having a higher pressure.

The pressurizing medium is supplied from a pressurizing medium supply source 18 into the bladder 15 through a supply-pipe 17B provided with a switching valve V17B and connected to the same supply port 14a. Then, in order to recover, the pressurizing medium is exhausted from the bladder 15 through an exhaust pipe 30B provided with a switching valve v30B and connected to the same exhaust port 14b.

In order to collapse the bladder 15 so that the vulcanized tire can be took out from the mold 10 after the completion of the vulcanization, a vacuum device 31 connected to the exhaust pipe is used.

In the vicinity Y of each steel cord 20, the maximum temperature T2 of the rubber therein is controlled within a range of from 150 to 165 deg.c so as not to form a sulfur-content-lowered part J in which the sulfur content X1 measured after the vulcanization is less than 50 % of the sulfur content X2 measured before the vulcanization. In other words, such a part that the sulfur content X1 is 50 % or more of the sulfur content X2 may be acceptable even if a sulfur-content-lowered part occured in the vicinity Y. The sulfur content X1 is however, preferably not less than 60 %, more preferably not less than 65 % of the sulfur content X2. If less than 50 %, the tensile property and hardness of the vulcanized rubber deteriorate.

As explained above, the "vicinity Y" is an adjoining region, preferably the surrounding region, which ranges from the cord surface to 3 mm therefrom.

If the maximum temperature T2 is more than 165 deg.C, it is difficult to keep the sulfur content X1 more than 50 % of the sulfur content X2. on the other hand, if the maximum temperature T2 is lower than 150 deg.c, it takes a long time VT to vulcanize the rubber and the production efficiency is lowered.

Fig.5 shows typical distribution curves Z1 and Z2 of the sulfur concentration. The curve Z1 was obtained from vulcanized tires in which the maximum temperature T2 in the vicinity Y of steel cords was controlled within the above-mentioned narrow range of from 150 to 165 deg.C. The curve Z2 was obtained from vulcanized tires in which the maximum temperature T2 in the vicinity Y of steel cords was higher than 165 deg.C.
In the distribution curve Z2, a remarkable minimum point P occurred, but in the distribution curve Z1, although a minimum point Q occurred, the lowering of the sulfur concentration became very small as compared with that of the curve Z2.

In order to limit the maximum temperature T2 to the above-mentioned range, the heating conditions by the mold and the heating conditions by the heating medium are controlled.

In the case of the steel belt, the distance from the inner surface of the tire to the belt cords is much shorter than the distance from the outer surface of the tire to the belt cords. Therefore, the rubber material in the vicinity Y of the steel belt cord 20 is much affected by the heating conditions by the heating medium.

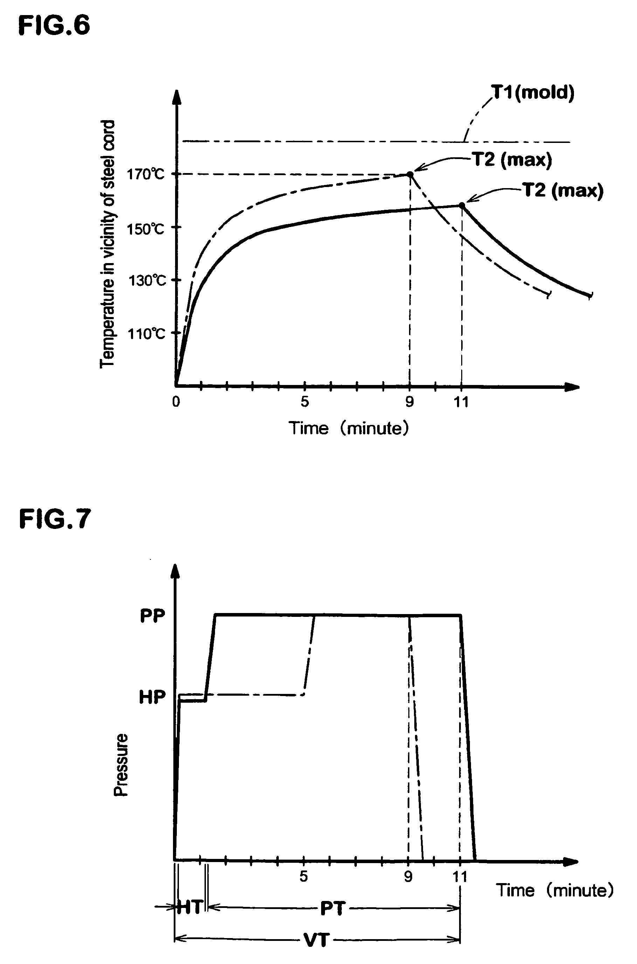

Fig.6 shows examples of the temperature change in the vicinity Y of steel belt cords obtained when a green tire was placed in the mold 10 of which inner surface was kept at a temperature of 185 deg.c, and practically simultaneous therewith, the bladder 15 is inflated with a heating medium having a temperature of 200 deg.C and then a pressurizing medium of high pressure was injected.
The chain line shows the temperature change when the heating medium of 200 deg.c was continuously injected for 2.5 minutes. The solid line shows the temperature change when the heating medium of 200 deg.c was continuously injected for 0.5 minutes.
As understood from Fig.6, the maximum temperature T2 can be exactly and effectively controlled by adjusting the time HT for injecting the heating medium.

In the temperature variation curves shown in Fig.6, the time when the temperature in the vicinity Y reaches to a maximum temperature T2 is substantially same as the time VT when the vulcanization is finished and the mold 10 is opened.

As to the heating medium, the use of a high temperature gas having a large heat capacity such as saturated steam is preferred. Conventionally, steam having a high temperature of 200 to 210 deg.c is used. Such high temperature steam of 210 deg.c or higher can be used in the present invention by shortening the injecting time HT. However, if the injecting time HT is very short, it becomes difficult to uniformly heat up the green tire. In this view, it is preferred to use saturated steam having a relatively low temperature of not higher than 200 deg.C, but not lower than 180 deg.C.
If the temperature of the steam is lower than 180 deg.c, as the saturated vapor pressure becomes lower than 1,049.84 kPa (10.36 atms), the pressure to cause rubber flows becomes insufficient. Therefore, even if the pressure of the pressurizing medium applied in succession to the heating medium, is increased, bareness of rubber tends to occur on the outer surface of the vulcanized tire.

If the injecting time HT is shorter than 20 seconds, it becomes difficulty to rise the maximum temperature T2 over 150 deg.C, and it takes a long time to reach the maximum temperature T2. Accordingly the production efficiency is remarkably lowered. Therefore, the time HT for continuously injecting the heating medium is at least 20 seconds, preferably at least 30 seconds, more preferably at least 40 seconds for the above reason.

If the injecting time HT is more than 2.5 minutes, there is a tendency that the temperature is rapidly increased in the initial stage of the vulcanization, and as a result, it becomes difficult to prevent the unfavorable lowering of the sulfur concentration in the vicinity Y of the steel cords. Therefore, the time HT for continuously injecting the heating medium having the above-mentioned temperature is not longer than 2.5 minutes, preferably shorter than 2.0 minutes, more preferably shorter than 1.5 minutes.
Conventionally, steam of 200 to 210 deg.C is injected for 3 to 5 minutes, therefore, this time period HT is considerably short.

As to the temperature T1 of the mold 10, on the other hand, if the temperature T1 exceeds 190 deg.C, the rubber located near the mold such as the tread rubber radially outside the belt, especially a part adjacent to the surface of the mold is liable to cause reversion during the vulcanizing the tire. Further, the temperature rise in the vicinity Y of the steel cords is accelerated, and it becomes difficult to prevent the unfavorable lowering of the sulfur concentration.
If the mold temperature T1 is less than 165 deg.C, a longer time (VT) is required for the vulcanization, so the production efficiency is lowered. Therefore, the temperature T1 of the mold 10 is controlled at a substantially constant value within a range of not less than 165 deg.C, but not more than 190 deg.C throughout the tire vulcanization process.
Incidentally, the temperature T1 is a temperature measured at the inner surface of the mold which surface contacts with the outer surface of the tire. The temperature is measured with sensors attached to the inside of the mold, and according to the output signals of the sensors, the above-mentioned heat source is controlled to adjust the temperature to the substantially constant value of T1.

In the vulcanization-molding process, immediately after the green tire 1 is put in the mold 10 having the temperature T1 as above, the mold 10 is closed and the heating medium is injected into the bladder 14 continuously for the time period HT so that the bladder 14 is fully inflated to the above-mentioned pressure HP and the heating medium is circulated through the pipes 17A and 30A (valves V17A and V30A open, valves V17B and V30B close).
Then, in stead of the heating medium, the pressurizing medium is injected into the bladder 14 for a time period PT (valves V17A and v30A close, valve v17B open) so that the bladder 14 is fully inflated to a pressure PP.
After elapse of the vulcanization time VT, the pressurizing medium is exhausted and the bladder is vacuumed to be collapsed, and the mold is opened to remove the vulcanized tire from the mold.

Fig.7 shows a typical example of the change of pressure of the bladder 14, namely that of the inside of the green tire 1. In this example, the inflation pressure HP during heating is substantially constant, and the inflation pressure PP during pressuring is also substantially constant. But, it is also possible to vary the pressure HP and/or the pressure PP a plurality of times at short intervals in order to enhance the rubber flow and to prevent the occurrence of bareness of rubber. In Fig.7, a conventional pressure change is indicated by a chain line.

The inflation pressure HP by the heating medium is higher than 1000 kPa, preferably higher than 1200 kPa. more preferably higher than 1300 kPa, but lower than 1900 kPa, preferably lower than 1700 kPa, more preferably lower than 1600 kPa. The inflation pressure PP by the pressurizing medium is higher than the above-mentioned pressure HP, and in a range of 1800 kPa to 2500 kPa.

As described above, the steel cord 20 is plated with a metal alloy 23 containing copper. The average thickness of the plated layer 23 is preferably in a range of from 0.10 to 0.35 micrometers, more preferably 0.20 to 0.25 micrometers.

Binary alloys such as brass (Cu 60-70% and Zn 30-40%) conventionally used in tire steel cords can be used in this invention.

As mentioned above, the sulfur in the topping rubber reacts with the copper to form a sulfide layer, and thereby the adhesion between the steel and rubber is improved in the ordinarily service conditions. However, under high temperature and high humidity service conditions, the copper becomes liable to diffuse into the topping rubber to deteriorate the adhesion.

In order to prevent the deterioration under high temperature and high humidity service conditions, a ternary alloy composed of copper (Cu), zinc (zn) and cobalt (Co) is preferably used in stead of the binary alloy.
If the cobalt content is less than 0.5 atomic %, the adhesion property under high temperature and high humidity conditions can not be sufficiently improved. On the other hand, even if the cobalt content exceeds 5.0 atomic %, further improvement can not be obtained though the material cost is increased.
Therefore, the cobalt content is not less than 0.5 atomic %, but not more than 5.0 atomic % with respect to the total(100%) of Cu(60-70%), Zn(30-40%) and Co.

Thus, as descried above, the steel cord 20 is made up of at least one, for example three steel filaments 24 each covered with the plated layer 23 of the ternary alloy.

Such plated steel cord 20 can be used in combination with the above-mentioned topping rubber 21 containing no cobalt element. (cobalt-free rubber)

Further, it is also possible to use it in combination with the topping rubber 21 into which cobalt is further added. (low-cobalt rubber) In this case, however, if the cobalt content of the topping rubber 21 is more than 0.2 phr, severance of polymer chains and decomposition of rubber additives is accelerated and deterioration of the rubber tends to occur. Therefore, it is preferable that the cobalt content is at most 0.2 phr, more preferably at most 0.1 phr.

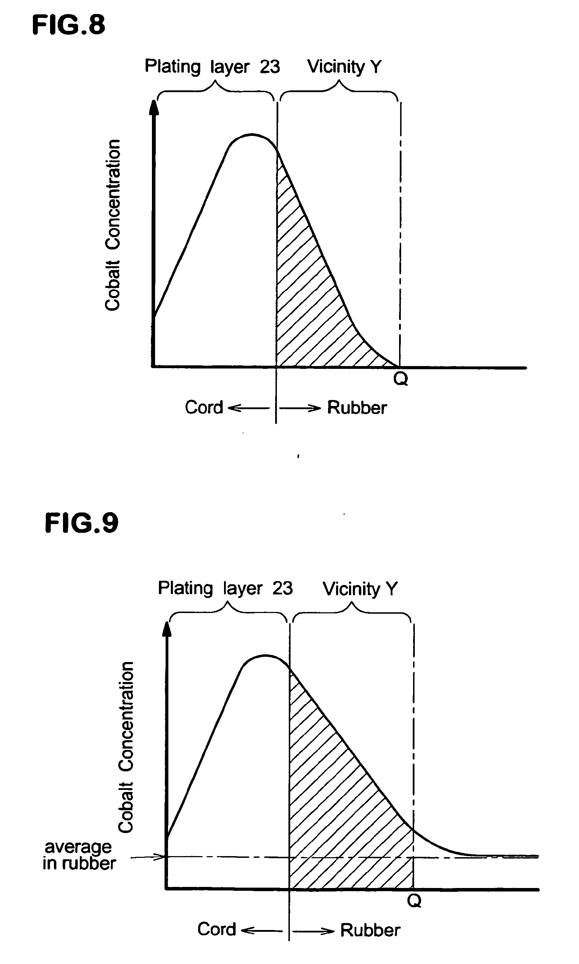

In the case of the cobalt-free topping rubber, as shown in Fig.8, the cobalt element migrates from the plating layer 23 to the topping rubber 21. In the topping rubber 21, therefore, the concentration of the cobalt element becomes maximum at the interface between the plating layer and topping rubber 21, and the concentration is gradually decreased to zero.

In the case of the low-cobalt topping rubber too, as shown in Fig.9, the cobalt element migrates from the plating layer 23 to the topping rubber 21. In the topping rubber 21, the concentration of the cobalt element becomes maximum at the interface between the plating layer and topping rubber 21, and the concentration is gradually decreased with the distance from the interface increases. In this case, unlike the cobalt-free rubber, the concentration converges with that of the topping rubber.

In both cases, in the vicinity Y of the steel cords, a high cobalt concentration zone is formed, abutting the surface of the plating layer 23. Therefore, even under high temperature and high humidity conditions, the diffusion of copper into the topping rubber can be effectively hindered by this zone, and the deterioration of the sulfide layer is prevented so as to maintain the good adhesion.

### Comparison Tests 1

Radial tires of size 195/65R15 for passenger car were produced under the conditions shown in Table 1 and tested for the belt durability and also checked for bareness of rubber on the tire outer surface.

The tires each had two cross breaker plies of brass plated steel cords rubberized with a natural rubber based cobalt-free topping rubber.
The mold used was a split mold having a dome type bagomatic bladder as schematically shown in Fig.1.
The heating medium was saturated steam having a temperature shown in Table 1.
The sulfur contents X1 and X2 are indicated in percentage by weight "wt%" of the whole.
The hardness of the rubber denotes a JIS type-A durometer hardness measured at 28 deg.c.
The vulcanization time VT denotes a time from closing of the mold to opening of the mold.

### Belt durability test:

The test tires were put in an oven controlled at a temperature of 70 deg.c and a relative humidity of 95 % for 6 weeks, and each mounted on a wheel rim of size 6X15JJ (tire pressure 200 kPa). Then, using a tire test drum, the tire was run at a speed of 80 km/h and a tire load of 6.96 k_{N} in order to measure the running distance to belt failure.
The running distance is shown in Table 1 by an index based on Ref.1 being 100, wherein the larger the index number, the better the durability.

### Bareness of rubber test:

with respect to each of the test tires, 1,000 test pieces were produced, and the number of test pieces which caused bareness of rubber due to poor rubber flow during vulcanization-molding was counted. The results are shown in Table 1 as the reciprocal number of the count, using an index based on Ex.1 being 100. Thus, the larger the value, the better the process yield.

**TABLE 1**

| Tire | Ex.1 | Ex.2 | Ex.3 | Ex.4 | Ex.5 | Ref.1 | Ref.2 | Ref.3 | Ref.4 | Ref.5 | Ex.6 | Ex.7 | Ex.8 | Ex.9 |
|---|---|---|---|---|---|---|---|---|---|---|---|---|---|---|
| Mold temperature T1 (deg.C) | 170 | 170 | 185 | 185 | 165 | 185 | 190 | 185 | 170 | 155 | 170 | 170 | 170 | 170 |
| Steam injecting time (minute) | 0.5 | 1 | 0.5 | 1 | 1.5 | 2.5 | 2.5 | 5 | 5 | 0.5 | 0.8 | 1.6 | 2.1 | 7 |
| Steam temperature (deg.C) | 200 | 200 | 200 | 200 | 200 | 200 | 200 | 200 | 200 | 200 | 190 | 190 | 170 | 170 |
| vulcanization time VT (minute) | 13 | 11 | 10.2 | 9.7 | 10 | 9 | 7.9 | 7.6 | 9.5 | 24 | 13 | 11 | 13 | 11 |
| Topping rubber | | | | | | | | | | | | | | |
| Max. temperature T2 (deg.C) | 155 | 160 | 160 | 165 | 163 | 170 | 170 | 175 | 167 | 148 | 153 | 158 | 151 | 155 |
| Sulfur content x1 (wt%) | 2 | 1.7 | 1.5 | 1.3 | 1.4 | 1.1 | 0.9 | 0.8 | 1.3 | 2.2 | 2.1 | 1.8 | 2.3 | 2.1 |
| sulfur content x2 (wt%) | 2.6 | 2.6 | 2.6 | 2.6 | 2.6 | 2.6 | 2.6 | 2.6 | 2.6 | 2.6 | 2.6 | 2.6 | 2.6 | 2.6 |
| x1/x2 ratio | 0.77 | 0.65 | 0.58 | 0.5 | 0.54 | 0.42 | 0.35 | 0.31 | 0.5 | 0.85 | 0.81 | 0.69 | 0.88 | 0.81 |
| JIS hardness | 71 | 71 | 69 | 68 | 69 | 68 | 66 | 65 | 69 | 71 | 71 | 71 | 72 | 72 |
| Belt durability | 300 | 280 | 160 | 130 | 150 | 100 | 80 | 70 | 125 | 300 | 320 | 290 | 350 | 330 |
| Bareness | 100 | -- | -- | -- | -- | -- | -- | -- | -- | -- | 110 | 130 | 70 | 40 |

### comparison Tests 2

Radial tires of size 195/65R15 for passenger car were produced under the conditions shown in Table 2 and tested for the belt durability and for the adhesion between the steel cords and topping rubber.

The tires each had two cross breaker plies of steel cords rubberized with a natural rubber based topping rubber.
The mold used was a split mold having a dome type bagomatic bladder as schematically shown in Fig.1.
The heating medium was saturated steam having a temperature of 200 deg.c.

Belt durability test:
same as the above mentioned

Adhesion test:
with respect to each of the test tires, a part of the belt layer was cut out from each of a fresh tire and a wet aged tire, wherein the wet aged tire means the tire put in an oven controlled at a temperature of 80 deg.C and a relative humidity of 95 % for 150 hours. Then, the cut-out specimen, namely, a strip of rubber in which the steel cords were embedded, was set in a tensile tester made by Instron corporation, and the cords were pulled out from the rubber. And based on the rubber remained on the pulled-out cord, the adhesive property was evaluated, using a proportional rating rank from 1 (there was no rubber remained and the cord was completely exposed) to 5 (the cord was completely covered with the rubber).
   In Table 2, "5+" indicates that the cord was completely covered with a relatively thick rubber. Thus, the adhesion property is more excellent.

Further, to obtain the tensile strength of the topping rubber itself, specimens were prepared from the same rubber compositions through the same vulcanization conditions as those of the respective tires shown in Table 2.
with respect to both of a fresh specimen and a dry aged specimen, the elongation at breakage was measured according to Japanese Industrial standard (JIS) K6251 "Tensile testing methods for vulcanized rubber". The dry aged specimen means the specimen put in an oven for 8 days, which oven was controlled at a temperature of 80 deg.c under a dry condition.
The results are shown in Table 2.

**Table 2**

| Tire | Ex.10 | Ex.11 | Ex.12 | Ex.13 | Ex.14 | Ref.6 | Ref.7 | Ref.8 |
|---|---|---|---|---|---|---|---|---|
| Mold temperature T1 | 185 | 170 | 185 | 185 | 185 | 185 | 185 | 185 |
| (deg.C) | | | | | | | | |
| steam temperature | 200 | 200 | 200 | 200 | 200 | 200 | 200 | 200 |
| (deg.C) | | | | | | | | |
| Topping rubber | | | | | | | | |
| Max. temperature T2 | 160 | 160 | 160 | 160 | 160 | 170 | 170 | 170 |
| (deg.C) | | | | | | | | |
| Cobalt content | 0.1 | 0.1 | 0.05 | 0 | 0.1 | 0.1 | 0.1 | 0 |
| (phr) | | | | | | | | |
| sulfur content | 0.58 | 0.77 | 0.58 | 0.58 | 0.58 | 0.42 | 0.42 | 0.42 |
| x1/x2 | | | | | | | | |
| Elongation at breakage | | | | | | | | |
| Fresh | 490 | 480 | 495 | 510 | 485 | 450 | 440 | 460 |
| Dry aged | 285 | 300 | 305 | 335 | 280 | 240 | 235 | 280 |
| steel cord | | | | | | | | |
| plated layer *1 | 3 | 3 | 3 | 3 | 2 | 2 | 2 | 2 |
| Adhesion property | | | | | | | | |
| Fresh | 5 | 5+ | 5 | 5 | 5 | 4 | 4 | 4 |
| wet aged | 5 | 5+ | 5 | 5 | 3 | 2 | 4 | 3 |
| Belt durability | 250 | 400 | 430 | 450 | 160 | 100 | 180 | 140 |

| | | | | | | | | |
|---|---|---|---|---|---|---|---|---|
| *1) 2: Binary alloy of Cu 65 atomic % and zn 35 atomic % 3: Ternary alloy of Cu 61 atomic %, zn 37 atomic % and Co 2 atomic % | | | | | | | | |

It is observed in Table 2 that Exs.10-13 tires had excellent adhesion property under high temperature and high humidity conditions, regardless of presence or absence of cobalt element in the topping rubber, since the belt cords were plated with the cu-zn-co ternary alloy.
In particular, when the cobalt content in the topping rubber was 0.05 phr, the topping rubber had a high tensile strength (breaking resistance), and even under high temperature and high humidity conditions, the deterioration thereof became slight. Therefore, the belt durability was further improved.
Further, from the comparison of Exs. 10 and 14 and Ref.6, it is understood that in both the cases of the binary alloy and ternary alloy, the adhesion property can be improved by vulcanizing the tires according to the present invention.

The present invention suitable applied to pneumatic tires for passenger cars, light trucks, sport utility vehicles and the like, provided with a steel belt, but it is also possible to apply to various pneumatic tires provided with a steel cord reinforcing layer.

## Claims

1. A method for manufacturing a pneumatic tire, comprising:
placing a green tire (1) in a mold (10); and
vulcanizing the green tire (1) in the mold (10) by applying heat to the tire (1),
**characterized in that**
the green tire (1) includes a steel cord reinforcing layer made of steel cords (20) rubberized with an unvulcanized topping rubber (21), and the unvulcanized topping rubber (21) contains sulfur to have a sulfur content X2, and
during vulcanizing the green tire (1), the maximum temperature of the topping rubber (21) in a vicinity (Y) of the steel cords (20) is controlled within a range of 150 to 165 deg.C, and the temperature of said mold (10) is controlled within a range of 165 to 190 deg.C, whereby the sulfur content X1 of the vulcanized topping rubber (21) in the vicinity (Y) of the steel cords (20) retains at least 50 % of said sulfur content X2.

2. The method according to claim 1, wherein
the steel cord reinforcing layer is a tread reinforcing belt (7) disposed in a tread portion (2) of the tire adjacently to the radially outside of a carcass (6).

3. The method according to claim 1, which further comprises
injecting the inside of the tire (1) with a heating medium having a temperature in a range of from 180 to 210 deg.C to apply heat to the tire (1).

4. The method according to claim 3, which further comprises
controlling the time to inject the heating medium into the inside of the tire (1) so as to control said maximum temperature of the topping rubber (21) within said temperature range.

5. The method according to claim 4, wherein
the time to inject the heating medium is not more than 2.5 minutes.

6. The method according to any one of claims 1 to 5, wherein
the steel cords (20) are plated with a ternary alloy (23) composed of copper, zinc and 0.5 to 5.0 atomic % of cobalt.

7. The method according to any one of claims 1 to 5, wherein
the steel cords (20) are plated with a ternary alloy (23) composed of copper, zinc and 0.5 to 5.0 atomic % of cobalt, and
the topping rubber (21) has a cobalt content of 0 to 0.1 phr.

## Patentansprüche

1. Verfahren zum Herstellen eines Luftreifens, das umfasst, dass:
ein Rohreifen (1) in einer Form (10) angeordnet wird; und
der Rohreifen (1) in der Form (10) vulkanisiert wird, indem Wärme auf den Reifen (1) aufgebracht wird,
**dadurch gekennzeichnet, dass**
der Rohreifen (1) eine Stahlkord-Verstärkungsschicht umfasst, die aus Stahlkorden (20) hergestellt wird, die mit einem nicht vulkanisierten Gummierungskautschuk (21) gummiert wird, und der nicht vulkanisierte Gummierungskautschuk (21) Schwefel enthält, so dass er einen Schwefelgehalt X2 aufweist, und
während des Vulkanisierens des Rohreifens (1) die maximale Temperatur des Gummierungskautschuks (21) in einer Nähe (Y) der Stahlkorde (20) derart gesteuert wird, dass sie in einem Bereich von 150 bis 165 Grad C liegt und die Temperatur der Form (10) derart gesteuert wird, dass sie in einem Bereich von 165 bis 190 Grad C liegt, wodurch der Schwefelgehalt X1 des vulkanisierten Gummierungskautschuks (21) in der Nähe (Y) der Stahlkorde (20) zumindest 50 % des Schwefelgehalts X2 beträgt.

2. Verfahren nach Anspruch 1, wobei die Stahlkord-Verstärkungsschicht ein Laufflächenverstärkungsgürtel (7) ist, der in einem Laufflächenabschnitt (2) des Reifens benachbart zu der radialen Außenseite einer Karkasse (6) angeordnet ist.

3. Verfahren nach Anspruch 1, das ferner umfasst, dass ein Heizmedium mit einer Temperatur in einem Bereich von 180 bis 210 Grad C ins Innere des Reifens (1) injiziert wird, um Wärme auf den Reifen (1) aufzubringen.

4. Verfahren nach Anspruch 3, das ferner umfasst, dass die Zeit zum Injizieren des Heizmediums in das Innere des Reifens (1) derart gesteuert wird, dass die maximale Temperatur des Gummierungskautschuks (21) in dem Temperaturbereich gesteuert wird.

5. Verfahren nach Anspruch 4, wobei die Zeit zum Injizieren des Heizmediums nicht mehr als 2,5 Minuten beträgt.

6. Verfahren nach einem der Ansprüche 1 bis 5, wobei die Stahlkorde (20) mit einer ternären Legierung (23) plattiert werden, die aus Kupfer, Zink und 0,5 bis 5,0 Atom-% Kobalt besteht.

7. Verfahren nach einem der Ansprüche 1 bis 5, wobei die Stahlkorde (20) mit einer ternären Legierung (23) plattiert werden, die aus Kupfer, Zink und 0,5 bis 5,0 Atom-% Kobalt zusammengesetzt ist und der Gummierungskautschuk (21) einen Kobaltgehalt von 0 bis 0,1 phr aufweist.

## Revendications

1. Procédé pour fabriquer un bandage pneumatique, comprenant les étapes consistant à :
placer un bandage cru (1) dans un moule (10) ; et
vulcaniser le bandage cru (1) dans le moule (10) en appliquant de la chaleur sur le bandage (1),
**caractérisé en ce que** :
le bandage cru (1) comprend une couche de renforcement en cordes d'acier réalisée à partir de cordes d'acier (20) caoutchoutées avec un caoutchouc de gommage non vulcanisé (21), et le caoutchouc de gommage non vulcanisé (21) comprend du souffre pour avoir une teneur en souffre X2, et
pendant la vulcanisation du bandage cru (1), la température maximum du caoutchouc de gommage (21) à proximité (Y) des cordes en acier (20) est contrôlée dans une plage allant de 150 à 165 degrés Celsius, et la température dudit moule (10) est contrôlée dans une plage allant de 165 à 190 degrés Celsius, moyennant quoi la teneur en souffre X1 du caoutchouc de gommage vulcanisé (21) à proximité (Y) des cordes d'acier (20) retient au moins 50 % de ladite teneur en souffre X2.

2. Procédé selon la revendication 1, dans lequel :
la couche de renforcement en cordes d'acier est une ceinture de renforcement de bande de roulement (7) disposée dans une partie de bande de roulement (2) du bandage de manière adjacente à l'extérieur radial d'une carcasse (6).

3. Procédé selon la revendication 1, qui comprend en outre l'étape consistant à :
injecter à l'intérieur du bandage (1) un milieu de chauffage ayant une température de l'ordre de 180 à 210 degrés Celsius pour appliquer de la chaleur sur le bandage (1).

4. Procédé selon la revendication 3, qui comprend en outre l'étape consistant à :
contrôler le temps pour injecter le milieu de chauffage à l'intérieur du bandage (1) afin de contrôler ladite température maximum du caoutchouc de gommage (21) dans les limites de ladite plage de température.

5. Procédé selon la revendication 4, dans lequel le temps pour injecter le milieu de chauffage n'est pas supérieur à 2,5 minutes.

6. Procédé selon l'une quelconque des revendications 1 à 5, dans lequel :
les cordes d'acier (20) sont plaquées avec un alliage ternaire (23) composé de cuivre, de zinc, et de 0,5 à 5,0 % atomique de cobalt.

7. Procédé selon l'une quelconque des revendications 1 à 5, dans lequel les cordes d'acier (20) sont plaquées avec un alliage ternaire (23) composé de cuivre, de zinc et de 0,5 à 5,0 % atomique de cobalt, et
le caoutchouc de gommage (21) a une teneur en cobalt de 0 à 0,1 phr.
